# EUROPEAN PATENT APPLICATION

(11) **EP 4 730 174 A1**
(43) Date of publication of application: **22.04.2026**
(21) Application number: 24857657.1
(22) Date of filing: 27.02.2024
(51) Int. Cl.: G06F 21/56

(54) **PROCESSING METHOD AND PROCESSING APPARATUS FOR CHECKING RULE**

(30) Priority: 25.08.2023 RU 2023122167
(71) Applicant: Huawei Cloud Computing Technologies Co., Ltd., Guiyang, Guizhou, 550025 (CN)
(72) Inventor: YANG, Chenhua, Guiyang, Guizhou 550025 (CN); BIAN, Pan, Guiyang, Guizhou 550025 (CN); PAN, Linjie, Guiyang, Guizhou 550025 (CN); ZENG, Muhan, Guiyang, Guizhou 550025 (CN); KULESHOV, Andrey, Guiyang, Guizhou 550025 (CN)
(74) Representative: Gill Jennings & Every LLP
(86) International application number: PCT/CN2024/078655
(87) International publication number: WO 2025/044101

(57) **Abstract**

This application provides a check rule processing method and processing apparatus. The processing method includes: obtaining to-be-checked code and/or related information about the to-be-checked code, where the related information about the to-be-checked code includes at least one of the following: a programming language of the to-be-checked code, a development framework of the to-be-checked code, a deployment form of the to-be-checked code, a service scope of the to-be-checked code, a third-party library used in the to-be-checked code, a coding style of the to-be-checked code, or description information of a target project to which the to-be-checked code belongs; determining a target rule set from a static analysis rule library based on the to-be-checked code and/or the related information about the to-be-checked code, where the target rule set includes one or more candidate check rules, and the one or more candidate check rules are used to perform static analysis on the to-be-checked code; and performing control to display the target rule set. The solutions in this application help improve static analysis efficiency.

## Description

This application claims priority to Russian Federation Patent Application No. 2023122167, filed with the Federal Service for Intellectual Property of the Russian Federation on August 25, 2023, and entitled "CHECK RULE RECOMMENDATION METHOD AND SYSTEM", which is incorporated herein by reference in its entirety.

### TECHNICAL FIELD

This application relates to the field of testing technologies, and more specifically, to a check rule processing method and processing apparatus.

### BACKGROUND

Static application security testing (static application security testing, SAST) mainly relies on static analysis for checking source code, to discover security vulnerabilities, code defects, and the like that are vulnerable to attacks, and is a white-box code check technology. The SAST can be used to check problems in code without running the code, to help a user quickly discover the problems before the code is deployed, thereby effectively reducing vulnerabilities and security risks.

An SAST service is used to provide a check capability according to a series of check rules. These rules usually implement defect check by checking an abstract representation of abstract syntax tree (abstract syntax tree, AST), control flow graph (control flow graph, CFG), data flow graph (data flow graph, DFG), or another program. Currently, the SAST service is used to provide a large quantity of check rules for various types of languages. Some SAST services further support user-defined check rules and support introducing open-source check rules, and can provide a powerful check capability. However, the foregoing solution also causes the quantity of check rules to increase greatly, and it is difficult for the user to effectively select a rule from the large quantity of check rules, severely affecting analysis efficiency.

Therefore, how to improve the analysis efficiency of the SAST becomes a problem to be urgently resolved.

### SUMMARY

This application provides a check rule processing method and processing apparatus, to help improve SAST analysis efficiency.

According to a first aspect, a check rule processing method is provided, including: obtaining to-be-checked code and/or related information about the to-be-checked code, where the related information about the to-be-checked code includes at least one of the following: a programming language of the to-be-checked code, a development framework of the to-be-checked code, a deployment form of the to-be-checked code, a service scope of the to-be-checked code, a third-party library used in the to-be-checked code, a coding style of the to-be-checked code, or description information of a target project to which the to-be-checked code belongs; determining a target rule set from a static analysis rule library based on the to-be-checked code and/or the related information about the to-be-checked code, where the target rule set includes one or more candidate check rules, and the one or more candidate check rules are used to perform static analysis on the to-be-checked code; and performing control to display the target rule set.

According to the solution in this embodiment of this application, the target rule set is determined based on at least one of the to-be-checked code and the related information about the to-be-checked code, that is, the target rule set is determined based on a feature of a project, and a check rule related to the to-be-checked code is selected, so that the check rule is more targeted. This helps implement comprehensive check of the to-be-checked code, and helps avoid a rule irrelevant to the to-be-checked code, to help improve static analysis efficiency and reduce a waste of resources. In the solution in this embodiment of this application, different check rules may be recommended for different users or different projects, and convenience is provided for the user to select a suitable rule from the check rules to perform static analysis, thereby helping improve check efficiency and improving user experience.

In addition, the solution in this embodiment of this application is used, thereby helping implement efficient reuse of an existing check rule and avoiding repeated development of the check rule, to reduce a waste of resources.

The deployment form of the to-be-checked code refers to a deployment and use manner of the to-be-checked code. For example, the deployment form may be classified into a virtual machine, a container, a bare-metal server, or the like. Alternatively, the deployment form may be classified into a microservice, a local application, or the like.

For example, the coding style may include a naming style, a comment style, a format style, or the like.

Optionally, the description information of the target project may be indicated by a readme (readme) file of the target project.

With reference to the first aspect, in some implementations of the first aspect, determining the target rule set from the static analysis rule library based on the to-be-checked code and/or the related information about the to-be-checked code includes: determining a first subset of the target rule set from the static analysis rule library based on similarities between the target project and a plurality of candidate projects, where the similarities between the target project and the plurality of candidate projects are determined based on a similarity between the to-be-checked code and code of at least one first candidate project and/or a similarity between the related information about the to-be-checked code and related information about code of at least one second candidate project, and the plurality of candidate projects include the at least one first candidate project or the plurality of candidate projects include the at least one second candidate project.

For example, the similarities between the target project and the plurality of candidate projects may be similarities between the to-be-checked code and code of a plurality of first candidate projects.

Alternatively, the similarities between the target project and the plurality of candidate projects may be similarities between the related information about the to-be-checked code and related information about a plurality of second candidate projects.

Alternatively, the similarities between the target project and the plurality of candidate projects may be based on the similarity between the related information about the to-be-checked code and the related information about the code of the at least one second candidate project, and the similarity between the to-be-checked code and the code of the at least one first candidate project.

In the solution in this embodiment of this application, the first subset of the target rule set may be determined from the check rules selected for the candidate projects based on a similarity between projects. This helps reuse a check rule for a similar project, and the to-be-checked code can be further matched, to provide a check rule suitable for the to-be-checked code. This helps comprehensively check the to-be-checked code, to avoid omitting a key rule. In addition, this helps improve accuracy of a check result, to help reduce a project-related security problem.

With reference to the first aspect, in some implementations of the first aspect, determining the first subset of the target rule set from the static analysis rule library based on the similarities between the target project and the plurality of candidate projects includes: determining the first subset according to a check rule selected for N candidate projects that are in the plurality of candidate projects and that have a highest similarity to the target project, where the check rule selected for the N candidate projects is from the static analysis rule library, and N is a positive integer.

With reference to the first aspect, in some implementations of the first aspect, the processing method further includes: performing an embedding representation on the to-be-checked code to obtain a representation vector of the to-be-checked code; and determining similarities between the to-be-checked code and code of a plurality of first candidate projects based on similarities between the representation vector of the to-be-checked code and representation vectors of the code of the plurality of first candidate projects; or the description information of the target project is indicated by a readme file of the target project. The processing method further includes: performing an embedding representation on the readme file of the target project, to obtain a representation vector of the readme file of the target project; and determining similarities between the related information about the to-be-checked code and related information about code of a plurality of second candidate projects based on similarities between the representation vector of the readme file of the target project and representation vectors of readme files of the plurality of second candidate projects.

For example, the embedding representation may be implemented by using a machine learning model.

During similarity calculation, the embedding representation may be performed by using a code large model. This helps improve accuracy of the similarity calculation, and further improves accuracy of a recommended rule.

With reference to the first aspect, in some implementations of the first aspect, determining the target rule set from the static analysis rule library based on the to-be-checked code and/or the related information about the to-be-checked code includes at least one of the following: obtaining, from the static analysis rule library, a check rule corresponding to the third-party library used in the to-be-checked code, and determining a second subset of the target rule set according to the check rule corresponding to the third-party library used in the to-be-checked code; obtaining, from the static analysis rule library, a check rule corresponding to the coding style of the to-be-checked code, and determining a third subset of the target rule set according to the check rule corresponding to the coding style of the to-be-checked code; or obtaining, from the static analysis rule library, a check rule corresponding to the programming language of the to-be-checked code, and determining a fourth subset of the target rule set according to the check rule corresponding to the programming language of the to-be-checked code.

In the solution in this embodiment of this application, the corresponding check rule is provided by analyzing the third-party library used in the to-be-checked code, thereby helping ensure secure use of the third-party library in the to-be-checked code. The corresponding check rule is provided by analyzing the coding style of the to-be-checked code, thereby helping the to-be-checked code conform to a corresponding coding specification.

With reference to the first aspect, in some implementations of the first aspect, the related information about the to-be-checked code may include the coding style of the to-be-checked code. The processing method may include: performing traversal check on an AST of the to-be-checked code through static check, to determine the coding style of the to-be-checked code.

In this embodiment of this application, in this embodiment of this application, a feature (for example, the coding style) of a project may be determined with reference to the static check, and a rule is recommended based on the feature of the project.

With reference to the first aspect, in some implementations of the first aspect, the processing method further includes: obtaining a package management file of the to-be-checked code; and analyzing the package management file, to determine the third-party library used in the to-be-checked code.

With reference to the first aspect, in some implementations of the first aspect, determining the target rule set from the static analysis rule library based on the to-be-checked code and/or the related information about the to-be-checked code includes: scanning the to-be-checked code according to a preset rule set, to determine a candidate problem in the to-be-checked code; and determining a fifth subset of the target rule set according to a check rule, in the preset rule set, according to which the candidate problem is exposed.

In this embodiment of this application, the to-be-checked code may be pre-scanned, and a problem existing in a current project may be searched for through pre-scanning.

A check rule according to which a problem is exposed is recommended to a user, to provide a more effective check rule for the user and helping avoid omitting an important check rule.

With reference to the first aspect, in some implementations of the first aspect, determining the fifth subset of the target rule set according to the check rule, in the preset rule set, according to which the candidate problem is exposed includes: performing control to display the candidate problem; obtaining feedback information of the candidate problem, where the feedback information of the candidate problem indicates a real problem in the candidate problem; and determining the fifth subset according to a check rule, in the preset rule set, according to which the real problem is exposed.

With reference to the first aspect, in some implementations of the first aspect, the processing method further includes: if there is an intersection between any two of the first subset, the second subset, the third subset, the fourth subset, and the fifth subset, performing deduplication and filtering on a subset that has the intersection, to obtain the target rule set.

The solution in this embodiment of this application is used, so that deduplication and filtering can be performed on each subset, thereby helping reduce a redundant rule and reducing repeated analysis, to reduce a waste of resources, reduce check time, and help improve user experience.

With reference to the first aspect, in some implementations of the first aspect, the processing method further includes: generating a configuration for a to-be-configured target check rule in the target rule set based on the to-be-checked code.

In the solution in this embodiment of this application, a rule configuration may be automatically generated, thereby improving rule use efficiency, and helping reduce problems of a false positive and a false negative caused by unfamiliarity with a check rule by a user, to improve analysis accuracy and lower a usage threshold for the user. Therefore, a user who is not a security expert can also use a part of advanced check capabilities, to help improve user experience. In addition, a rule configuration is generated based on a project, thereby helping avoid a case in which a key rule is not configured, and reducing a project domain-related security problem.

With reference to the first aspect, in some implementations of the first aspect, the processing method further includes: obtaining feedback information for the target rule set, where the feedback information for the target rule set indicates a selected target check rule.

According to a second aspect, a check rule processing apparatus is provided, including: a first obtaining module, configured to obtain to-be-checked code and/or related information about the to-be-checked code, where the related information about the to-be-checked code includes at least one of the following: a programming language of the to-be-checked code, a development framework of the to-be-checked code, a deployment form of the to-be-checked code, a service scope of the to-be-checked code, a third-party library used in the to-be-checked code, a coding style of the to-be-checked code, a comment of the to-be-checked code, or description information of a target project to which the to-be-checked code belongs; and a processing module, configured to: determine a target rule set from a static analysis rule library based on the to-be-checked code and/or the related information about the to-be-checked code, where the target rule set includes one or more candidate check rules, and the one or more candidate check rules are used to perform static analysis on the to-be-checked code; and perform control to display the target rule set.

With reference to the second aspect, in some implementations of the second aspect, the processing module is specifically configured to: determine a first subset of the target rule set from the static analysis rule library based on similarities between the target project and a plurality of candidate projects, where the similarities between the target project and the plurality of candidate projects are determined based on a similarity between the to-be-checked code and code of at least one first candidate project and/or a similarity between the related information about the to-be-checked code and related information about code of at least one second candidate project, and the plurality of candidate projects include the at least one first candidate project or the plurality of candidate projects include the at least one second candidate project.

With reference to the second aspect, in some implementations of the second aspect, the processing module is specifically configured to: determine the first subset according to a check rule selected for N candidate projects that are in the plurality of candidate projects and that have a highest similarity to the target project, where the check rule selected for the N candidate projects is from the static analysis rule library, and N is a positive integer.

With reference to the second aspect, in some implementations of the second aspect, the processing module is specifically configured to: perform an embedding representation on the to-be-checked code to obtain a representation vector of the to-be-checked code; and determine similarities between the to-be-checked code and code of a plurality of first candidate projects based on similarities between the representation vector of the to-be-checked code and representation vectors of the code of the plurality of first candidate projects; or the description information of the target project is indicated by a readme file of the target project, and the processing module is specifically configured to: perform an embedding representation on the readme file of the target project, to obtain a representation vector of the readme file of the target project; and determine similarities between the related information about the to-be-checked code and related information about code of a plurality of second candidate projects based on similarities between the representation vector of the readme file of the target project and representation vectors of readme files of the plurality of second candidate projects.

With reference to the second aspect, in some implementations of the second aspect, the processing module is specifically configured for at least one of the following: obtaining, from the static analysis rule library, a check rule corresponding to the third-party library used in the to-be-checked code, and determining a second subset of the target rule set according to the check rule corresponding to the third-party library used in the to-be-checked code; obtaining, from the static analysis rule library, a check rule corresponding to the coding style of the to-be-checked code, and determining a third subset of the target rule set according to the check rule corresponding to the coding style of the to-be-checked code; or obtaining, from the static analysis rule library, a check rule corresponding to the programming language of the to-be-checked code, and determining a fourth subset of the target rule set according to the check rule corresponding to the programming language of the to-be-checked code.

With reference to the second aspect, in some implementations of the second aspect, the processing apparatus further includes: a second obtaining module, configured to: obtain a package management file of the to-be-checked code; and analyze the package management file, to determine the third-party library used in the to-be-checked code.

With reference to the second aspect, in some implementations of the second aspect, the processing module is specifically configured to: scan the to-be-checked code according to a preset rule set, to determine a candidate problem in the to-be-checked code; and determine a fifth subset of the target rule set according to a check rule, in the preset rule set, according to which the candidate problem is exposed.

With reference to the second aspect, in some implementations of the second aspect, the processing module is specifically configured to: perform control to display the candidate problem; obtain feedback information of the candidate problem, where the feedback information of the candidate problem indicates a real problem in the candidate problem; and determine the fifth subset according to a check rule, in the preset rule set, according to which the real problem is exposed.

With reference to the second aspect, in some implementations of the second aspect, the processing apparatus further includes: a configuration module, configured to generate a configuration for a to-be-configured target check rule in the target rule set based on the to-be-checked code.

With reference to the second aspect, in some implementations of the second aspect, the processing apparatus further includes: a third obtaining module, configured to obtain feedback information for the target rule set, where the feedback information for the target rule set indicates a selected target check rule.

It should be understood that extensions, definitions, explanations, and descriptions of related content in the first aspect are also applicable to same content in the second aspect.

According to a third aspect, a computing device cluster is provided, and includes at least one computing device. Each computing device includes a processor and a memory. A processor of the at least one computing device is configured to execute instructions stored in a memory of the at least one computing device, to cause the computing device cluster to perform the method in any one of the first aspect and the implementations of the first aspect.

According to a fourth aspect, a computer-readable medium is provided, including computer program instructions. When the computer program instructions are executed by a computing device cluster, the computing device cluster performs the method in any one of the first aspect and the implementations of the first aspect.

According to a fifth aspect, a computer program product including instructions is provided. When the instructions are run by a computing device cluster, the computing device cluster is caused to perform the method in any one of the first aspect and the implementations of the first aspect.

### BRIEF DESCRIPTION OF DRAWINGS

FIG. 1 is a diagram of an SAST service architecture;
FIG. 2 is a diagram of a list of a plurality of rule sets;
FIG. 3 is a schematic flowchart of a check rule processing method according to an embodiment of this application;
FIG. 4 is a schematic flowchart of another check rule processing method according to an embodiment of this application;
FIG. 5 is a diagram of an example processing procedure of a check rule according to an embodiment of this application;
FIG. 6 is a diagram of a check rule processing procedure in an SAST cloud service platform according to an embodiment of this application;
FIG. 7 is a diagram of a check rule processing procedure in an IDE according to an embodiment of this application;
FIG. 8 is a block diagram of a check rule processing apparatus according to an embodiment of this application;
FIG. 9 is a block diagram of a computing device according to an embodiment of this application;
FIG. 10 is a block diagram of a computing device cluster according to an embodiment of this application; and
FIG. 11 is a block diagram of another computing device cluster according to an embodiment of this application.

### DESCRIPTION OF EMBODIMENTS

The following describes technical solutions in this application with reference to accompanying drawings.

Terms used in the following embodiments are merely intended to describe specific embodiments, but are not intended to limit this application. "One", "a", and "this" of singular forms as used in this specification and the appended claims of this application are intended to include a form like "one or more", unless otherwise indicated in the context clearly. It should be further understood that, in the following embodiments of this application, "at least one piece", "at least one of item", and "one or more" mean one, two, or more. "First", "second", and various numbers are merely intended for differentiation for ease of description, and are not intended to limit the scope of embodiments of this application. "And/or" is used to describe a correspondence between objects that correspond to each other, and indicates that three relationships may exist. For example, "A and/or B" may indicate the following three cases: Only A exists, only B exists, and both A and B exist, where A and B may be singular or plural. The character "/" generally indicates an "or" relationship between associated objects. Sequence numbers of the following processes do not mean an execution sequence. The execution sequence of the processes should be determined based on functions and internal logic of the processes, and should not constitute any limitation on an implementation process of embodiments of this application. For example, in embodiments of this application, the words "301", "401", "501", and the like are merely identifiers for ease of description, and are not intended to limit an execution sequence of steps.

Reference to "one embodiment", "some embodiments", or the like described in this specification means that a specific feature, structure, or feature described with reference to the embodiment is included in one or more embodiments of this application. In this application, the word "example", "for example", or the like indicates giving an example, an illustration, or a description. Any embodiment or design solution described as an "example" or "for example" in this application should not be explained as being more preferred or having more advantages than another embodiment or design solution. To be precise, use of the word "example", "for example", or the like is intended to present a relative concept in a specific manner. The terms "include", "comprise", "have", and their variants all mean "include but are not limited to", unless otherwise specifically emphasized in another manner. In embodiments of this application, descriptions such as "when", "in a case", and "if" all mean that a device performs corresponding processing in a specific objective situation, but are not intended to limit time, do not require that the device has a determining action during implementation, and do not mean any other limitation.

In this application, "indicate" may include direct indication and indirect indication". When a piece of indication information indicates A, it may be included that the indication information may directly indicate A or indirectly indicate A, but it does not indicate that the indication information definitely carries A.

To help a person skilled in the art better understand technical solutions in this application, the following first describes some terms that may be mentioned in embodiments of this application.
1. Integrated development environment (integrated development environment, IDE):
   The IDE is an application program provides a program development environment, generally includes tools such as a code editor, a compiler, a debugger, and a graphical user interface, and is an integrated development software service suite that integrates a code writing function, an analysis function, a compilation function, and a debugging function.
   The IDE may include a local IDE and a web (web) IDE. The local IDE is also referred to as a desktop IDE. The local IDE is installed in a local development and operating environment of a user. For example, the local development and operating environment may be a terminal device, for example, a desktop computer, a notebook computer, or a mobile phone. The web IDE refers to an online IDE service, and includes an IDE frontend and an IDE backend. The IDE backend runs in a remote environment. For example, the remote environment may be a cloud server, that is, provide the IDE for the user in a form of a cloud service.
2. Check engine:
   The check engine is a program that implements a check capability.
3. Taint source (source):
   The taint source is a starting point of sensitive data.
4. Taint sink (sink):
   The taint sink is a place in which sensitive data may be exploited.
5. Third-party library:

The third-party library, also referred to as a third-party library or an external library, is a reusable code library developed by an organization or individual and released to the public. These libraries usually provide prewritten code for specific functions or complex functions, so that a developer can directly use these libraries without writing all code from scratch.

An SAST service mainly relies on static analysis for checking source code, to discover security vulnerabilities, code defects, and the like that are vulnerable to attacks, and is a white-box code check technology. SAST can be used to check problems in code without running the code, to help users quickly discover the problems before the code is deployed, thereby effectively reducing vulnerabilities and avoiding security risks.

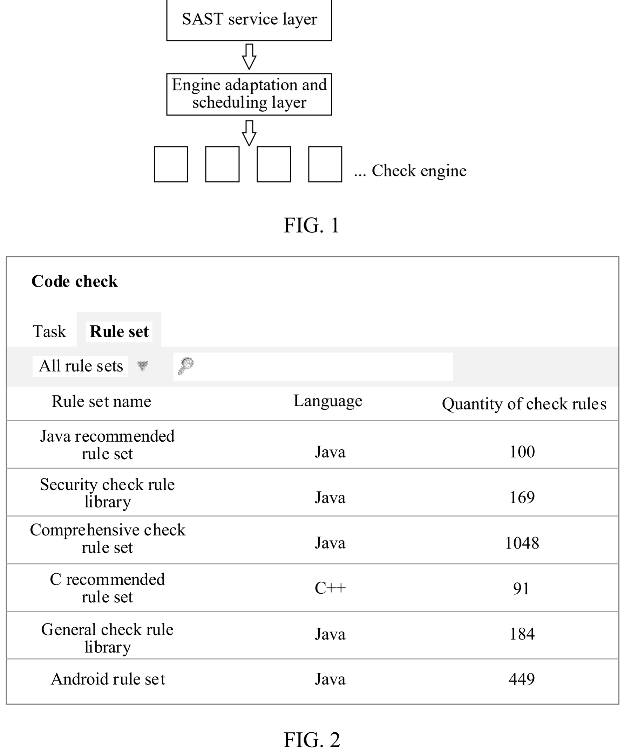

FIG. 1 is a diagram of an SAST service architecture.

As shown in FIG. 1, the SAST service architecture may include an SAST service layer, an engine adaptation and scheduling layer, and check engines. An SAST service provider provides a check capability according to a large quantity of check rules in each check engine. These check rules usually implement code check by an abstract representation of an AST, a CFG, a DFG, or another program. Some SAST service platforms support accessing other check engines that conform to intermediate protocols in addition to self-developed check engines of the platforms. In addition, some SAST service platforms further provide a domain specific language (domain specific language, DSL) for the code check. This greatly improves flexibility and usability of the code check and reduces difficulty of defining a check rule by a user.

An SAST service platform provides a large quantity of check rules for various types of languages. Some SAST services further support user-defined check rules and support introducing open-source check rules, and can provide a powerful check capability. However, the foregoing solution also causes a quantity of check rules to increase greatly.

FIG. 2 is a diagram of a list of a plurality of rule sets.

As shown in FIG. 2, an SAST service platform may reorganize the rule sets based on programming languages, application scenarios, industry specifications, or the like. The list of the rule sets shown in FIG. 2 may be provided for a user for selection.

When the user autonomously selects a rule set, it is difficult for the user to effectively select a rule due to a large quantity of check rules, causing a waste of resources. In addition, a redundant rule may exist in these check rules. Code is repeatedly analyzed according to the redundant rule, causing a waste of resources and affecting analysis efficiency.

In view of this, an embodiment of this application provides a check rule processing method, to recommend a check rule, and help improve analysis efficiency.

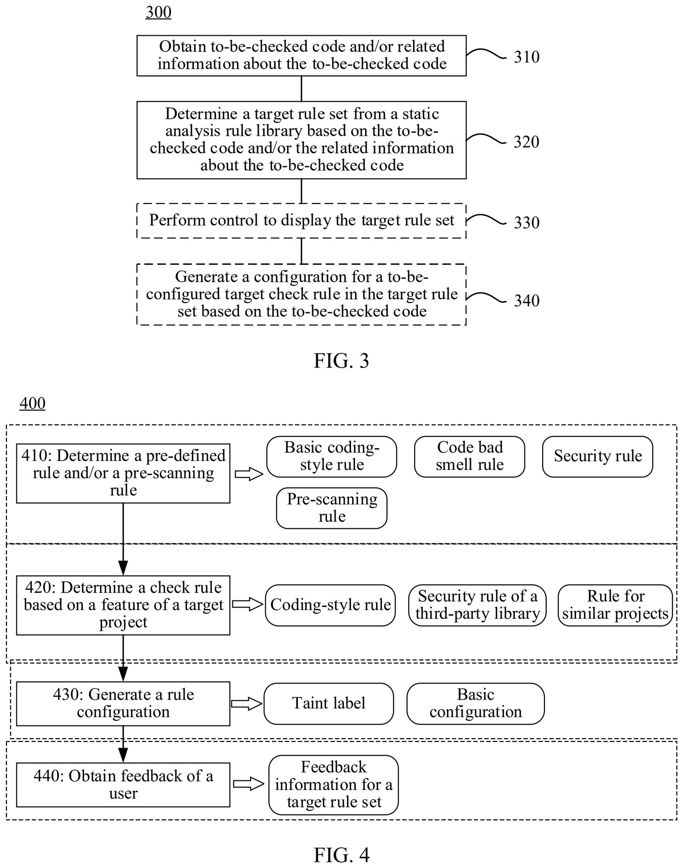

FIG. 3 shows a check rule processing method according to an embodiment of this application. The method shown in FIG. 3 may be performed by a check rule processing apparatus. The check rule processing apparatus may be configured to provide a check rule recommendation function. The check rule may be used for static analysis.

In some possible implementations, the check rule processing apparatus may be an apparatus configured to provide an SAST service, or a functional module of the apparatus configured to provide the SAST service.

In some possible implementations, the check rule processing apparatus may cooperate with an apparatus configured to provide an SAST service, to provide the check rule. For example, the check rule processing apparatus may be an apparatus configured to provide a DSL, or a functional module of the apparatus configured to provide the DSL. The DSL is applied to the static analysis field.

The following provides example descriptions for the check rule processing apparatus.

For example, the check rule processing apparatus may be a development tool or a functional module of the development tool. The SAST service may be provided by the development tool. For example, the check rule processing apparatus may be an IDE. The IDE may include a desktop IDE and a web IDE. A backend of the web IDE runs in a remote environment. For example, the remote environment may be a cloud server. For another example, the check rule processing apparatus may be a command-line interface (command-line interface, CLI) tool.

For example, a testing case processing apparatus may be deployed in a cloud management platform, in other words, the method 300 may be applied to the cloud management platform. The check rule processing apparatus may be an independent product (for example, a cloud platform application, a service, or a microservice), or may be a functional module in a product. For example, the testing case processing apparatus may be deployed in an SAST cloud service platform. The SAST cloud service platform may be configured to provide the SAST service, that is, provide the SAST service in a form of a cloud service. The SAST service provided by the SAST cloud service platform is also referred to as an SAST cloud service. The cloud management platform provides an online service for the SAST cloud service platform, and the backend runs in the cloud management platform. The cloud management platform is configured to manage an infrastructure that provides a plurality of cloud services. The infrastructure may include a plurality of cloud data centers, and each cloud data center may include a plurality of servers. Each server includes a cloud service resource, and provides a corresponding service for a user.

For ease of description, in this embodiment of this application, an example in which the method 300 is performed by the SAST cloud service platform or the IDE is mainly used for description, and does not constitute any limitation on the solutions in embodiments of this application.

As shown in FIG. 3, the method 300 includes the following steps.

310: Obtain to-be-checked code and/or related information about the to-be-checked code.

The related information about the to-be-checked code includes at least one of the following: a programming language of the to-be-checked code, a development framework of the to-be-checked code, a deployment form of the to-be-checked code, a service scope of the to-be-checked code, a coding style of the to-be-checked code, a third-party library used in the to-be-checked code, description information of a target project to which the to-be-checked code belongs, or the like.

320: Determine a target rule set from a static analysis rule library based on the to-be-checked code and/or the related information about the to-be-checked code. The target rule set includes one or more candidate check rules, and the one or more candidate check rules are used to perform static analysis on the to-be-checked code.

The static analysis rule library includes a plurality of check rules. The plurality of check rules are used to perform static analysis on program code.

In embodiments of this application, the "check rule" may also be referred to as a "rule" for short.

According to the solution in this embodiment of this application, the target rule set is determined based on at least one of the to-be-checked code and the related information about the to-be-checked code, that is, the target rule set is determined based on a feature of a project, and a check rule related to the to-be-checked code is selected, so that the check rule is more targeted. This helps implement comprehensive check of the to-be-checked code, and helps avoid a rule irrelevant to the to-be-checked code, to help improve static analysis efficiency and reduce a waste of resources. In the solution in this embodiment of this application, different check rules may be recommended for different users or different projects.

In addition, the solution in this embodiment of this application is used, thereby helping implement efficient reuse of an existing check rule and avoiding repeated development of the check rule, to reduce a waste of resources.

Further, optionally, the method 300 may further include step 330.

330: Perform control to display the target rule set.

The target rule set is provided for the user.

The target rule set may be recommended to the user for performing selection by the user.

For example, step 330 may include: displaying the target rule set through a user interface.

In the solution in this embodiment of this application, the target rule set may be recommended to the user for the selection. All rules in the target rule set are rules related to the to-be-checked code, that is, a recommendation is performed, as required, based on the feature of the project. In this way, convenience can be provided for the user to select a suitable rule from the target rule set to perform static analysis, thereby helping improve check efficiency and improving user experience.

In addition, this solution helps implement the efficient reuse of the existing check rule, improves utilization of a developed rule, improves value of an existing check capability, and helps reduce repeated development of the existing check rule, to reduce a waste of resources.

A recommended rule provided in this solution may also be used as a reference for the user to develop a check rule, thereby helping improve development efficiency of the check rule.

Specifically, in some scenarios, for example, in a process in which the user develops the check rule, a plurality of target check rules may be obtained based on the to-be-checked code and/or the related information about the to-be-checked code, and the plurality of obtained target check rules are displayed to the user. The plurality of target check rules may provide references for the user. If determining that in the target rule set, there is a check rule that meets a requirement, the user may directly select a corresponding check rule from the target rule set, and use the corresponding check rule as a basis of the static analysis. Alternatively, the user may use the target rule set for the static analysis by only needing to modify a part of the rules in the target rule set or add a part of rules on the basis of the target rule set, without writing check rules of the entire project. The solution in this embodiment of this application greatly reduces development time of the check rule, lowers a usage threshold, and improves development efficiency, to help improve user experience. For example, during DSL development, the user may modify a part of DSL rules in the target rule set or supplement a part of DSL rules on the basis of the target rule set, to complete the DSL development required by the user.

For example, the to-be-checked code may be source code.

For example, the programming language of the to-be-checked code may include Java, Python, a C language, or the like. A type of the programming language is not limited in this embodiment of this application.

The development framework and the deployment form of the to-be-checked code may also be collectively referred to as an ecosystem of the to-be-checked code, that is, a development ecosystem of the to-be-checked code.

In other words, the related information about the to-be-checked code may also include the ecosystem of the to-be-checked code.

The development ecosystem may include a used third-party software system and a deployment and use manner.

Third-party software may also be referred to as a third-party library.

For example, a third-party software system of spring may be considered as an ecosystem. The ecosystem includes an open-source framework and a tool set, for building a Java application.

The deployment form of the to-be-checked code refers to a deployment and use manner of the to-be-checked code. The deployment form of the to-be-checked code is a deployment form of the target project to which the to-be-checked code belongs. A specific classification manner of the deployment form may be set as required.

For example, the deployment form may be classified into a virtual machine, a container, a bare-metal server, or the like.

For example, the target project may be run in the container. A deployment form of the container may be considered as an ecosystem type.

For another example, the target project may be run in the bare-metal server. A deployment form of the bare-metal server may be considered as an ecosystem type.

Alternatively, the deployment form may be classified into a microservice, a local application, or the like.

For example, the target project may be deployed as the microservice, that is, may be provided for the user for use in a form of the microservice. A deployment form of the microservice may be considered as an ecosystem type.

For another example, the target project may be deployed as the local application, that is, provided for the user for use in a form of the local application. A local deployment form may be considered as an ecosystem type.

Technology stacks used in different ecosystems may vary greatly.

For example, the coding style may include a naming style, a comment style, a format style, or the like.

The description information of the target project is descriptions for the target project.

For example, the description information of the target project may indicate at least one of the following: a service scope of processing of the target project, a structure of the target project, a running environment of a target, or the like.

The service scope of the processing of the target project may also be understood as an application field of the target project. For example, the target project may be used for code check, to be specific, the service scope of the processing of the target project may include the code check. For another example, the target project may be used for a shopping transaction, to be specific, the service scope of the processing of the target project may include the shopping transaction.

Optionally, the description information of the target project may be indicated by a readme (readme) file of the target project.

In step 310, manners of obtaining the to-be-checked code and the related information about the to-be-checked code may be the same, or may be different.

In a possible example, obtaining the to-be-checked code may include obtaining input to-be-checked code.

The to-be-checked code may be input by the user.

For example, the check rule processing apparatus (for example, the IDE) may obtain input code in real time, and use the input code as the to-be-checked code.

For example, the check rule processing apparatus may obtain a modified code file, and use code in the code file as the to-be-checked code.

For example, the code file may be a code file committed to a local code repository. After a code change of the user is committed (committed), the code in the code file may be used as the to-be-checked code.

For another example, the code file may be a code file stored in a local temporary storage area.

For another example, the code file may be a code file pushed to a remote code repository.

For example, the check rule processing apparatus may obtain the modified code file, and use incremental code in the modified code file as the to-be-checked code.

In this way, when the code is changed, the target rule set may be updated in time. This helps continuously provide a matching check rule for the project, to improve check accuracy.

The foregoing is merely examples. A manner of obtaining the to-be-checked code may be adjusted for an application scenario. The manner of obtaining the to-be-checked code is not limited in this embodiment of this application.

When the related information about the to-be-checked code includes a plurality of pieces of information, manners of obtaining the plurality of pieces of information may be the same, or may be different.

In a possible example, obtaining the related information about the to-be-checked code may include: obtaining input related information about the to-be-checked code.

The related information about the to-be-checked code may be input by the user.

For example, the related information about the to-be-checked code may include the programming language of the to-be-checked code. The programming language of the to-be-checked code may be input by the user. For example, labels of a plurality of candidate programming languages are provided for the user, and the user selects a corresponding programming language.

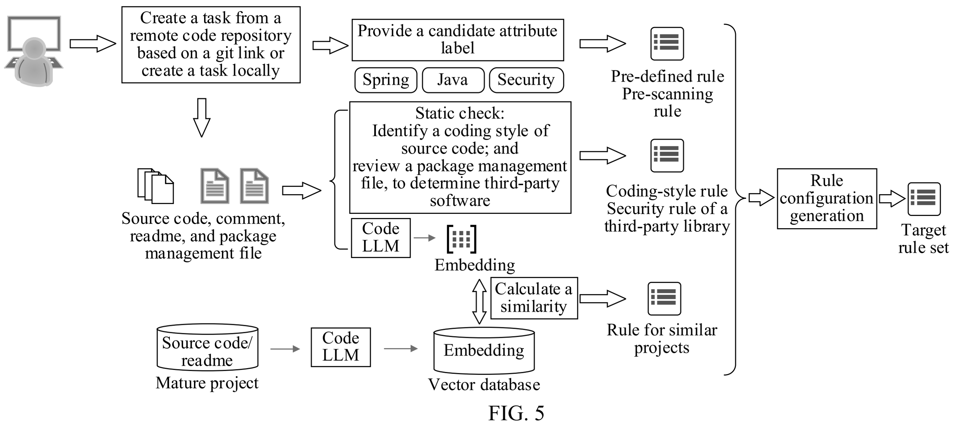

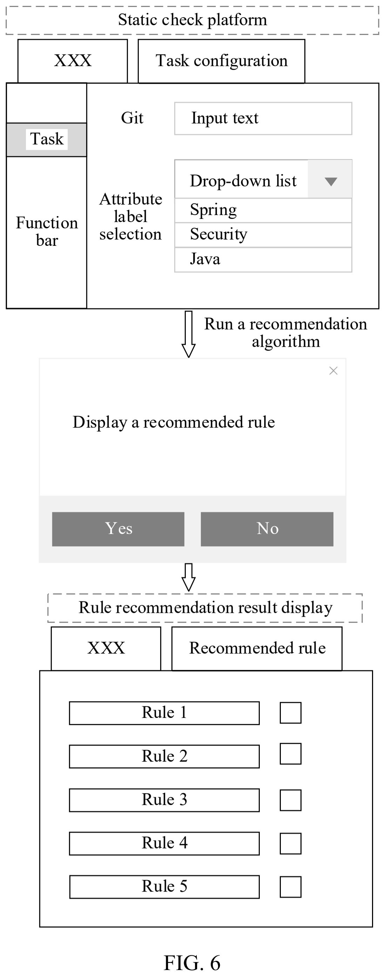

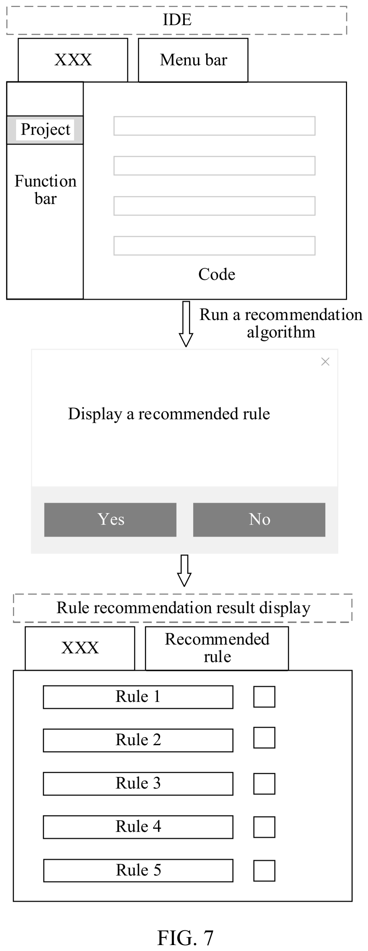

For example, the related information about the to-be-checked code may include the ecosystem of the to-be-checked code. The ecosystem of the to-be-checked code may be input by the user. For example, as shown in FIG. 6 or FIG. 7, labels of a plurality of candidate ecosystems are provided for the user, and the user selects a corresponding ecosystem. For example, as shown in FIG. 5, a label of a candidate ecosystem may include Spring, Security, Java, or the like.

In a possible example, obtaining the related information about the to-be-checked code may include: analyzing the to-be-checked code or a related file of the to-be-checked code, to obtain the related information about the to-be-checked code.

Alternatively, step 310 may also be understood as: obtaining the to-be-checked code and/or the related file of the to-be-checked code.

Optionally, the related file of the to-be-checked code may include at least one of the following: the readme file of the target project or a package management file of the to-be-checked code.

The readme file of the target project may indicate the description information of the target project.

For example, the related information about the to-be-checked code may include the coding style of the to-be-checked code. For example, traversal check is performed on an AST of the to-be-checked code through static check, to determine the coding style of the to-be-checked code. For example, if a proportion, to the to-be-checked code, of code that is in the to-be-checked code and that conforms to a coding style is greater than or equal to a set threshold, the coding style may be used as the coding style of the to-be-checked code.

In this embodiment of this application, in this embodiment of this application, the feature (for example, the coding style) of the project may be determined with reference to the static check, and a rule is recommended based on the feature of the project.

For example, the related information about the to-be-checked code may include the third-party library used in the to-be-checked code.

Optionally, the method 300 may further include: analyzing the package management file of the to-be-checked code, to determine the third-party library used in the to-be-checked code, or third-party software used by the user.

For example, the related information about the to-be-checked code may include the deployment form of the to-be-checked code. For example, the deployment form of the to-be-checked code may be determined by analyzing the to-be-checked code.

For example, the related information about the to-be-checked code may include the service scope of the to-be-checked code. For example, the service scope of the to-be-checked code may be determined by analyzing the to-be-checked code.

It should be understood that the foregoing is merely examples, and does not constitute any limitation on a manner of obtaining the related information about the code. For example, the programming language of the to-be-checked code may alternatively be obtained by analyzing the to-be-checked code. The manner of obtaining the related information about the to-be-checked code may be adjusted for an application scenario. This is not limited in this embodiment of this application.

Optionally, step 320 may include step 321 (not shown in the figure).

321: Determine a first subset of the target rule set from the static analysis rule library based on similarities between the target project and a plurality of candidate projects.

In other words, the first subset of the target rule set is determined from check rules selected for the plurality of candidate projects based on the similarities between the target project and the plurality of candidate projects. The check rules selected for the plurality of candidate projects are from the static analysis rule library.

The candidate project may be a mature project that has undergone check rule selection.

For a candidate project, a similarity between the target project and the candidate project may be determined based on at least one of the following: a similarity between the to-be-checked code and code of the candidate project, or a similarity between the related information about the to-be-checked code and related information about the code of the candidate project.

The related information about the code of the candidate project may also be referred to as related information about the candidate project.

For a plurality of candidate projects, similarities between the target project and the plurality of candidate projects may be determined based on a similarity between the to-be-checked code and code of at least one first candidate project, and/or a similarity between the related information about the to-be-checked code and related information about the code of the at least one second candidate project.

In other words, step 321 may include any one of the following:
determining, based on the similarity between the to-be-checked code and the code of the at least one first candidate project and the similarity between the related information about the to-be-checked code and the related information about the code of the at least one second candidate project, the first subset of the target rule set from a rule selected for the at least one first candidate project and a rule selected for the at least one second candidate project;
determining, based on a similarity between the to-be-checked code and code of a plurality of first candidate projects, the first subset of the target rule set from rules selected for the plurality of first candidate projects; or
determining, based on the similarity between the related information about the to-be-checked code and related information about code of a plurality of second candidate projects, the first subset of the target rule set from rules selected for the plurality of second candidate projects.

The plurality of candidate projects include the first candidate project and the second candidate project. "First" in the "first candidate project" merely indicates that the code of the first candidate project may be used to determine a similarity between the code of the first candidate project and the to-be-checked code, and has no other limitation function. In other words, if a similarity between code of a candidate project and the to-be-checked code is used to determine the first subset, the candidate project may be considered as the first candidate project. "Second" in the "second candidate project" merely indicates that the related information about the code of the second candidate project may be used to determine a similarity between the related information about the code of the second candidate project and the related information about the to-be-checked code, and has no other limitation function. In other words, if a similarity between related information about code of a candidate project and the related information about the to-be-checked code is used to determine the first subset, the candidate project may be considered as the second candidate project. The at least one first candidate project and the at least one second candidate project may be the same, or may be different.

Optionally, step 321 may include: determining the first subset according to a check rule selected for N candidate projects that are in the plurality of candidate projects and that have a highest similarity to the target project. N is a positive integer. The check rule selected for the N candidate projects is from the static analysis rule library.

The check rule selected for the N candidate projects may be referred to as a rule for similar projects corresponding to the target project.

For example, the check rule selected for the N candidate projects is used as an element of the first subset. A check rule in the first subset may be obtained through deduplication and filtering. There is a duplicate check rule in the check rule selected for the N candidate projects, and a check rule that is selected for the N candidate projects and that is obtained through deduplication and filtering on the check rule selected for the N candidate projects is used as the element of the first subset.

The following provides example descriptions for step 321.

For example, the similarities between the target project and the plurality of candidate projects may be similarities between the to-be-checked code and code of the plurality of candidate projects (that is, the plurality of first candidate projects). The check rule selected for the N candidate projects that are in the plurality of candidate projects and that have a highest similarity between code and the to-be-checked code is used as the element of the first subset.

For example, the similarities between the target project and the plurality of candidate projects may be similarities between the related information about the to-be-checked code and related information about the plurality of candidate projects (that is, the plurality of second candidate projects). The check rule selected for the N candidate projects that are in the plurality of candidate projects and that have a highest similarity between related information and the related information about the to-be-checked code is used as the element of the first subset.

For example, the similarities between the target project and the plurality of candidate projects may be based on the similarity between the related information about the to-be-checked code and the related information about the code of the at least one second candidate project, and the similarity between the to-be-checked code and the code of the at least one first candidate project. If there is a same candidate project in the at least one first candidate project and the at least one second candidate project, a similarity between the target project and the candidate project may be a statistical value of a similarity between code and a similarity between related information. For example, the statistical value may be a maximum value, a minimum value, an average value, a sum, or the like.

An example in which the statistical value is the maximum value is used. It is assumed that the plurality of candidate projects include a project #A, a project #B, a project #C, and a project #D, the at least one first candidate project includes the project #A, the project #B, and the project #C, and the at least one candidate project includes the project #C and the project #D. A similarity between code of the project #A and the to-be-checked code is 60%, a similarity between code of the project #B and the to-be-checked code is 70%, and a similarity between code of the project #C and the to-be-checked code is 80%. A similarity between related information about the code of the project #C and the related information about the to-be-checked code is 75%, and a similarity between related information about the code of the project #D and the related information about the to-be-checked code is 85%. A similarity between the project #C and the target project may be a maximum value, that is, 80%. Similarities between the four projects in a sequence of the project #A, the project #B, the project #C, and the project #D, and the target project are respectively 60%, 70%, 80%, and 85%. It should be understood that the foregoing values are merely example descriptions, and do not constitute any limitation on the solutions in embodiments of this application.

Optionally, the similarity between the to-be-checked code and the code of the first candidate project may be determined based on a similarity between a representation vector of the to-be-checked code and a representation vector of the code of the first candidate project.

For example, the similarity between the to-be-checked code and the code of the first candidate project may be in a positive correlation relationship with the similarity between the representation vector of the to-be-checked code and the representation vector of the code of the first candidate project.

For example, the similarity between the to-be-checked code and the code of the first candidate project may be the similarity between the representation vector of the to-be-checked code and the representation vector of the code of the first candidate project.

Specifically, a representation vector of the source code may be obtained by performing embedding (embedding) representation on the source code. The similarity between the representation vector of the to-be-checked code and the representation vector of the code of the first candidate project may also be referred to as a similarity between embedding of the to-be-checked code and embedding of the code of the first candidate project.

Optionally, the method 300 may further include: performing embedding representation on the to-be-checked code, to obtain the representation vector of the to-be-checked code.

In some implementations, the to-be-checked code may be from a code file in a code repository. Performing embedding representation on the to-be-checked code may also be referred to as performing embedding representation on the code repository.

The representation vector of the code of the first candidate project may be obtained by performing embedding representation on the code of the first candidate project.

Further, the representation vector of the code of the first candidate project may be pre-generated. For example, the representation vector of the code of the first candidate project may be pre-stored in a vector database. Before similarity calculation, the representation vector of the code of the first candidate project may be read from the vector database.

In an example, embedding representation may be implemented by using a machine learning model.

For example, embedding representation may be performed on the source code by using a code large model. The code large model may also be referred to as a code large language model (code large language model, code LLM). For example, the code large model may include Unixcoder, Codebert, Codex, Pangucode, or the like. Unixcoder is a unified cross-modal pre-trained model (unified cross-modal pre-trained model) for programming languages. Codebert is a pre-trained model for programming and natural languages (pre-trained model for programming and natural languages). Pangucode may also be referred to as a Pangu model.

It should be understood that the foregoing is merely examples. In another scenario, a similarity between source code may be calculated in another manner. This is not limited in this embodiment of this application.

Optionally, a similarity between the related information about the to-be-checked code and the related information about the code of the second candidate project may be determined based on a similarity between a representation vector of the related information about the to-be-checked code and a representation vector of the related information about the code of the second candidate project.

The similarity between the related information about the to-be-checked code and the related information about the code of the second candidate project may be determined based on a similarity between a part or all of the related information about the to-be-checked code and a part or all of the related information about the code of the second candidate project.

In other words, when the similarity between the related information is calculated, if the related information about the to-be-checked code includes a plurality of pieces, similarity calculation may be separately performed based on a part of the plurality of pieces of related information, or similarity calculation may be performed based on each of the plurality of pieces of related information.

For example, the related information about the to-be-checked code may include the coding style of the to-be-checked code and the description information of the target project. A similarity between the related information about the to-be-checked code and related information about the second candidate project may be a similarity between the description information of the target project and description information of the second candidate project. Alternatively, a similarity between the related information about the to-be-checked code and related information about the second candidate project may include a similarity between the description information of the target project and description information of the second candidate project, and a similarity between the coding style of the to-be-checked code and a coding style of the second candidate project.

The following uses an example in which the related information includes the description information for description. The similarity between the related information about the to-be-checked code and related information about the code of the second candidate project may be the similarity between the description information of the target project and the description information of the second candidate project.

For example, the similarity between the description information of the target project and the description information of the second candidate project may be in a positive correlation relationship with a similarity between a representation vector of the description information of the target project and a representation vector of the description information of the second candidate project.

For example, the similarity between the description information of the target project and the description information of the second candidate project may be the similarity between the representation vector of the description information of the target project and the representation vector of the description information of the second candidate project.

For example, the description information may be indicated by the readme file. The representation vector of the description information may be a representation vector of the readme file.

The representation vector of the readme file may be obtained by performing embedding representation on the readme file.

Optionally, the method 300 may further include: obtaining a representation vector of the readme file of the target project by performing embedding representation on the readme file of the target project.

A representation vector of the readme file of the second candidate project may be obtained by performing embedding representation on a readme file of the second candidate project.

A similarity between the representation vector of the readme file of the target project and the representation vector of the readme file of the second candidate project may also be referred to as a similarity between embedding of the readme file of the target project and embedding of the readme file of the second candidate project.

Further, the representation vector of the readme file of the second candidate project may be pre-generated. For example, the representation vector of the readme file of the second candidate project may be pre-stored in the vector database. Before similarity calculation, the representation vector of the readme file of the second candidate project may be read from the vector database.

In an example, embedding representation may be implemented by using the machine learning model.

For example, embedding representation may be performed on the related information (for example, the description information) by using the code large model. For specific examples, refer to the foregoing descriptions. Details are not described herein again.

A type of a model used to perform embedding representation on the related information and a type of a model used to perform embedding representation on the source code may be the same, or may be different.

It should be understood that the foregoing is merely examples. In another scenario, the similarity between the related information may be calculated in another manner. This is not limited in this embodiment of this application.

In the solution in this embodiment of this application, the first subset of the target rule set may be determined from the check rules selected for the candidate projects based on a similarity between projects. This helps reuse a check rule for a similar project, and the to-be-checked code can be further matched, to provide a check rule suitable for the to-be-checked code. This helps comprehensively check the to-be-checked code, to avoid omitting a key rule. In addition, this helps improve accuracy of a check result, to help reduce a project-related security problem.

In addition, during similarity calculation, the embedding representation may be performed by using the code large model. This helps improve accuracy of the similarity calculation, and further improves accuracy of the recommended rule.

Optionally, the related information about the to-be-checked code may include the third-party library used in the to-be-checked code. In this case, the method 300 may further include: obtaining, from the static analysis rule library, a check rule corresponding to the third-party library used in the to-be-checked code; and determining a second subset of the target rule set according to the check rule corresponding to the third-party library used in the to-be-checked code.

Check rules corresponding to a plurality of third-party libraries may be stored in the static analysis rule library, and the check rule corresponding to the third-party library used in the to-be-checked code is obtained from the static analysis rule library. For example, a check rule corresponding to a third-party library #A, a check rule corresponding to a third-party library #B, and a check rule corresponding to a third-party library #C are stored in the static analysis rule library. It is determined, through analysis, that the third-party library used in the to-be-checked code is the third-party library #B, and the check rule corresponding to the third-party library #B is obtained from the static analysis rule library.

The check rule corresponding to the third-party library is used to check the third-party library used in the to-be-checked code. The check rule corresponding to the third-party library may also be referred to as a security rule of the third-party library or an improper-use rule of the third-party library, and is used to check the third-party library, to analyze whether use of the third-party library in the to-be-checked code is secure, conforms to a specification, or the like.

For example, the second subset may include the check rule corresponding to the third-party library.

For example, a set including the security rule of the third-party library may be used as the second subset.

A part of interfaces of the third-party software have a vulnerability, or a vulnerability may occur when a part of interfaces of the third-party software are improperly used.

For example, the check rule corresponding to the third-party software may be used to check a vulnerability of an interface of the third-party software and the vulnerability generated due to the improper use. For example, the check rule corresponding to the third-party software may include a check rule for an API that has a vulnerability, a check rule for API misuse, and the like.

In the solution in this embodiment of this application, the corresponding check rule is provided by analyzing the third-party library used in the to-be-checked code, thereby helping ensure secure use of the third-party library in the to-be-checked code.

Optionally, the related information about the to-be-checked code may include the coding style of the to-be-checked code. In this case, the method 300 may further include: obtaining, from the static analysis rule library, a check rule corresponding to the coding style of the to-be-checked code; and determining a third subset of the target rule set according to the check rule corresponding to the coding style of the to-be-checked code.

Check rules corresponding to a plurality of coding styles may be stored in the static analysis rule library, and the check rule corresponding to the coding style of the to-be-checked code is obtained from the static analysis rule library. For example, a check rule corresponding to a coding style #A, a check rule corresponding to a coding style #B, and a check rule corresponding to a coding style #C are stored in the static analysis rule library. It is determined, through analysis, that the coding style of the to-be-checked code is the coding style #A, and the check rule corresponding to the coding style #A is obtained from the static analysis rule library.

The check rule corresponding to the coding style of the to-be-checked code may be used to check a code block that is in the to-be-checked code and that does not conform to the coding style. The check rule corresponding to the coding style of the to-be-checked code may also be referred to as a coding-style check rule of the to-be-checked code.

For example, the coding style may include the naming style, the comment style, and the format style. The check rule corresponding to the coding style may be used to check whether a name, a comment, code indentation, and the like of the source code conform to a specification of the coding style.

For example, the third subset may include the check rule corresponding to the coding style of the to-be-checked code.

For example, a set including the check rule corresponding to the coding style of the to-be-checked code may be used as the third subset.

Optionally, the related information about the to-be-checked code may include the programming language of the to-be-checked code. In this case, the method 300 may further include: obtaining, from the static analysis rule library, a check rule corresponding to the programming language of the to-be-checked code; and determining a fourth subset of the target rule set according to the check rule corresponding to the programming language of the to-be-checked code.

Check rules corresponding to a plurality of types of programming languages may be stored in the static analysis rule library, and the check rule corresponding to the programming language of the to-be-checked code is obtained from the static analysis rule library. For example, a check rule corresponding to a programming language #A and a check rule corresponding to a programming language #B are stored in the static analysis rule library. The programming language of the to-be-checked code is the programming language #A, and the check rule corresponding to the programming language #A is obtained from the static analysis rule library.

The check rule corresponding to the programming language is a check rule applicable to the programming language.

For example, the fourth subset may include the check rule corresponding to the programming language.

For example, a set including the check rule corresponding to the programming language may be used as the fourth subset.

In addition, in some implementations, the ecosystem of the to-be-checked code may also indicate the programming language of the to-be-checked code, to be specific, the check rule corresponding to the programming language of the to-be-checked code may also be determined based on the ecosystem of the to-be-checked code.

In each of different programming languages and ecosystems, there are a part of rules that are basic rules applicable to the programming language. This type of rule is applicable to different projects written in the programming language. In the static analysis rule library, the basic rule may be managed based on the programming language. This type of rule may be determined based on industry consensus or practical experience.

The check rule corresponding to the programming language may also be referred to as a pre-defined rule corresponding to the coding language.

For example, the check rule corresponding to the programming language may include at least one of the following types: a coding-style rule, a code bad smell rule, a security rule, or the like.

The check rule corresponding to the programming language may be a general check rule of the programming language. Correspondingly, the coding-style rule corresponding to the coding language may be a general coding-style rule of the programming language. The code bad smell rule corresponding to the coding language may be a general code bad smell rule of the programming language. The code bad smell rule identifies a code bad smell in the to-be-checked code. The security rule corresponding to the coding language may be a general security rule of the programming language.

Optionally, the method 300 may further include: scanning the to-be-checked code according to a preset rule set, to determine a candidate problem in the to-be-checked code; and determining a fifth subset of the target rule set according to a check rule, in the preset rule set, according to which the candidate problem is exposed.

The exposed candidate problem is a problem obtained through check according to the preset rule set. The check rule according to which the candidate problem is exposed is a check rule that is not conformed to by the code block in the to-be-checked code. The candidate problem is a problem determined according to the check rule.

For example, the fifth subset may include the check rule according to which the problem is exposed.

For example, the preset rule set may include the security rule.

A coding-style rule covered by SAST may be different from the coding style of the to-be-checked code. In pre-scanning, scanning of a coding-style problem may be removed.

In some implementation forms, the to-be-checked code is from the code repository. In this case, full scanning may be performed on the code repository according to the preset rule set, to determine a candidate problem in the code repository.

For example, before a 1^{st} check task starts, full scanning is performed on the code repository based on the security rule, to determine the candidate problem in the code repository. A set of the security rule may be set as required. For example, the security type rule may be from the check rule corresponding to the programming language of the to-be-checked code.

Optionally, determining the fifth subset of the target rule set according to the check rule, in the preset rule set, according to which the candidate problem is exposed may include the following steps.
(1) Perform control to display the candidate problem.
(2) Obtain feedback information of the candidate problem, where the feedback information of the candidate problem indicates a real problem in the candidate problem.
(3) Determine the fifth subset according to a check rule, in the preset rule set, according to which the real problem is exposed.

The candidate problem is provided for the user, for confirmation by the user, and the fifth subset is determined based on the feedback information from the user for the candidate problem.

The candidate problem may be classified into two types: the real problem and a false positive problem. The real problem may also be referred to as an accurate problem. The real problem is a problem that actually exists in code rather than the false positive problem.

The feedback information of the candidate problem may include a plurality of forms.

For example, the user may resolve a part or all of candidate problems. The feedback information of the candidate problem may include a problem that is in the candidate problem and that is resolved by the user. The problem that is resolved by the user is the real problem.

For another example, the user may select a part or all of candidate problems, and confirm the part or all of the candidate problems as real problems. The feedback information of the candidate problem may include a selection result of the user. The selection result of the user is the real problem.

For another example, the user may select a part or all of candidate problems, and confirm the part or all of the candidate problems as false positive problems. The feedback information of the candidate problem may include a selection result of the user. A problem other than the selection result of the user is a real problem. A check rule corresponding to the false positive problem is removed from the check rule according to which the candidate problem is exposed, and a remaining check rule is the check rule in which the real problem is exposed.

If the user chooses not to perform confirmation, for example, the feedback information of the candidate problem is empty, all candidate problems may be considered as real problems. The check rule according to which the real problem is exposed is the check rule according to which the candidate problem is exposed.

For example, the fifth subset may include the check rule, in the preset rule set, according to which the real problem is exposed.

For example, a set including the check rule according to which the real problem is exposed may be used as the fifth subset.

A rule in the fifth subset may also be referred to as a pre-scanning rule.

In an example, before the 1^{st} check task starts, full security rule scanning may be performed on the code repository. A scanning report of this scanning may be provided for the user for confirmation. The scanning report indicates a problem existing in the code repository. A check rule corresponding to the problem that is resolved by the user and/or a check rule corresponding to the accurate problem confirmed by the user are/is used as the pre-scanning rule. In other words, the check rule corresponding to the false positive problem confirmed by the user is removed from the check rule according to which the problem is exposed, and a check rule according to which the accurate problem is exposed is used as the pre-scanning rule. If the user does not perform confirmation, all check rules in which problems are exposed may be used as pre-scanning rules.

The foregoing is merely examples, and does not constitute any limitation on the solutions in embodiments of this application. For example, in another implementation, a scanning result may not be provided for the user, and a set including the check rule according to which the candidate problem is exposed is directly used as the fifth subset.

A problem existing in a current project may be searched for through pre-scanning.

It should be understood that the foregoing is merely some examples of rule recommendations. For other related information, refer to the foregoing solutions for the rule recommendations. For example, check rules corresponding to a plurality of deployment forms may be stored in the static analysis rule library, and a check rule corresponding to the deployment form of the to-be-checked code is obtained from the static analysis rule library. The check rule corresponding to the deployment form of the to-be-checked code may be used as an element of the target rule set. For another example, check rules corresponding to a plurality of service scopes may be stored in the static analysis rule library, and a check rule corresponding to the service scope of the to-be-checked code is obtained from the static analysis rule library. The check rule corresponding to the service scope of the to-be-checked code may be used as the element of the target rule set.

For ease of description, the first subset, the second subset, the third subset, the fourth subset, and the fifth subset are mainly used as examples for description in embodiments of this application, and do not constitute any limitation on the scope of embodiments of this application.

There may be an intersection set or no intersection set between any two of the first subset, the second subset, the third subset, the fourth subset, and the fifth subset.

After the foregoing subsets are determined, deduplication and filtering may be performed on the subsets, to obtain the target rule set.

When the user autonomously selects a rule set from the rule library for check, the selected check rule may be redundant, that is, repeated check may occur. Code is repeatedly analyzed according to a redundant rule, causing a waste of resources and increasing check time costs. The solution in this embodiment of this application is used, so that deduplication and filtering can be performed on each subset, thereby helping reduce the redundant rule and reducing the repeated analysis, to reduce the waste of resources, reduce check time, and help improve user experience.

In the solution in this embodiment of this application, a check rule may be recommended from different perspectives based on different features of projects, for example, based on the to-be-checked code and different related information about the to-be-checked code, thereby implementing a hierarchical rule recommendation. In addition, in the solution in this embodiment of this application, check rules may be determined for different projects as required, thereby implementing more refined recommendations.

For example, a plurality of subsets of the target rule set may be respectively provided for the user in a form of a plurality of sets. Further, a source of each subset may be further prompted to the user. For example, the first subset is recommended based on a similar project. The second subset is recommended based on third-party software used in a project.

Alternatively, the target rule set may be provided for the user in a form of a set, that is, the subsets are not distinguished. For example, a check rule in the target rule set is displayed in a list.

Further, in step 330, related information about a target check rule in the target rule set may be further marked on an interaction interface. For example, related information about a check rule may include a specification document to which the check rule belongs, a common weakness enumeration (common weakness enumeration, CWE) type to which the check rule belongs, or the like.

Further, optionally, the method 300 may further include step 340.

340: Generate a configuration for a to-be-configured target check rule in the target rule set based on the to-be-checked code.

For example, the generated configuration may include a basic configuration or a taint configuration. The taint configuration is a taint label generation configuration of a taint rule.

The taint rule is a check rule implemented through taint analysis. For example, in the taint analysis, whether data introduced by a taint source in a program can be directly propagated to a taint convergence point without undergoing harmless processing may be analyzed. If the data introduced by the taint source in the program cannot be directly propagated to the taint convergence point without undergoing the harmless processing, an information flow is secure. If the data introduced by the taint source in the program can be directly propagated to the taint convergence point without undergoing the harmless processing, there may be a problem in the program, like privacy data leakage or a risky data operation.

For example, step 340 may be performed before step 330.

If a check rule that needs to be configured exists in the target rule set, a corresponding configuration is generated for the check rule that needs to be configured. After the configuration is generated, the target rule set is provided for the user.

In this case, whether there is a configuration file for the check rule may also be displayed on the interaction interface. The user may preview a check rule for which a configuration file is generated, and view the configuration file.

Further, a modification function may be further provided to allow the user to modify the configuration file or the check rule.

In this way, the target rule set recommended to the user is an out-of-the-box rule.

Alternatively, step 340 may be performed after step 330.

After the target rule set is provided for the user, the user may perform selection in the target rule set. If there is a check rule that needs to be configured in the target check rule selected by the user for static analysis, a corresponding configuration is generated for the target check rule that needs to be configured and that is selected by the user.

In this way, a configuration may be generated only for a check rule that needs to be used subsequently for static analysis, thereby helping save resources.

Some check rules do not need to be configured, are out-of-the-box rules, and may support scanning tasks of a same type of programming language or a plurality of types of programming languages. Some other check rules need to be configured, and then the problem in the project can be accurately found according to the some other check rules. A part of rules cannot be correctly used without a basic configuration, and a part of rules can be correctly used only after a configuration is generated based on project content. Manually entering a basic configuration and performing marking with a taint label need a large quantity of labor costs, and need expert knowledge for completion. Therefore, a rule usage threshold is high.

In the solution in this embodiment of this application, a rule configuration may be automatically generated, thereby improving rule use efficiency, and helping reduce problems of a false positive and a false negative caused by unfamiliarity with the check rule by the user, to improve analysis accuracy and lower the usage threshold for the user. Therefore, a user who is not a security expert can also use a part of advanced check capabilities, to help improve user experience. In addition, a rule configuration is generated based on a project, thereby helping avoid a case in which the key rule is not configured, for example, avoid a case in which a part of taint labels may be omitted when marking with the taint labels is manually performed, and reducing a project domain-related security problem.

Further, optionally, the method 300 may further include: obtaining feedback information for the target rule set. The feedback information for the target rule set indicates a selected target check rule. The selected target check rule is a check rule for static analysis.

In step 330, the target rule set may be provided for the user for selection.

For example, the user may select a part or all of target check rules from the target rule set, to implement static analysis. The feedback information for the target rule set may include the part or all of the target check rules.

For example, the user may delete a part or all of target check rules from the target rule set, and use a remaining target check rule for the static analysis. The feedback information for the target rule set may include the deleted target check rule. Alternatively, the feedback information for the target rule set may include different remaining target check rules.

That the feedback information for the target rule set indicates the selected target check rule may also be understood as that the feedback information for the target rule set indicates an unselected target check rule.

In an example, the feedback information for the target rule set may be used to optimize a pre-order recommendation policy.

For example, the feedback information for the target rule set may be used to adjust at least one of the following types of recommendation policies: a pre-defined rule, a pre-scanning rule, a coding-style rule, a security rule of the third-party library, a rule for similar projects, or the like.

For example, for the third subset of the target rule set, if the user selects fewer check rules from the third subset or even does not select any check rule from the third subset, a manner of determining the coding style may be optimized, and accuracy of determining the coding style may be improved, to provide a more suitable coding-style rule.

In an example, the feedback information for the target rule set may be used to optimize the machine learning model.

For example, as described above, an embedding representation process may be implemented by using the machine learning model. For example, if the user does not select the rule for similar projects, the machine learning model may be optimized to obtain a more accurate representation vector, to provide a more accurate rule for similar projects.

For example, as described above, the taint label may be generated by using the machine learning model. For example, if the user does not select the taint rule, the machine learning model may be optimized to obtain a more accurate taint label.

In the solution in this embodiment of this application, a recommendation policy is continuously optimized by collecting feedback information of the user, thereby helping continuously improve a recommendation capability, and continuously providing a more suitable check rule for the user.

The solution in this embodiment of this application may be applied to a static analysis scenario, thereby recommending a check rule for a static analysis process.

The solution in this embodiment of this application may be applied to a code writing scenario.

For example, the method 300 may be triggered when the user creates a check task. After the user creates the check task, the method 300 is triggered, to recommend a check rule to the user.

For example, the method 300 may alternatively be triggered when code of the user is changed.

For example, in the IDE, a code change may be monitored in real time. If the code is changed, the method 300 is triggered, to perform a real-time rule recommendation.

For another example, when the user saves code, the method 300 may be triggered, to recommend a check rule to the user. The to-be-checked code may be code in a temporary storage area.

For another example, when code is committed to the local code repository, the method 300 may be triggered, to recommend a check rule to the user. The to-be-checked code may include code in the local code repository.

For another example, when code is pushed to the remote code repository, the method 300 may be triggered, to recommend a check rule to the user. The to-be-checked code may include code in the remote code repository.

The solution in this embodiment of this application may be applied to a scenario in which full scanning is performed on the SAST cloud service.

For example, when full scanning needs to be performed on the SAST cloud service, the method 300 is triggered, to recommend a check rule for the SAST cloud service.

The foregoing is merely examples. The solution in this embodiment of this application may also be applied to another scenario related to the check rule. For example, a check rule is recommended to the user in a DSL rule market. For another example, when the user writes a DSL, a check rule is recommended to the user. This is not limited in this embodiment of this application.

FIG. 4 is a schematic flowchart of a check rule processing method according to an embodiment of this application. The method 400 shown in FIG. 4 may be considered as a specific implementation of the method 300 shown in FIG. 3. For related descriptions, refer to the method 300. To avoid repetition, when the method 400 is described, some descriptions are properly omitted.

For example, as shown in FIG. 4, after a check task is created, the method 400 may be performed, and a corresponding check rule is recommended. It should be understood that this is merely an example herein. The method 400 may be triggered in another manner. For specific descriptions, refer to the foregoing descriptions. Details are not described herein again.

As shown in FIG. 4, the method 400 may include the following steps.

410: Determine a pre-defined rule and/or a pre-scanning rule.

For example, the pre-defined rule may include at least one of a basic coding-style rule, a code bad smell rule, or a security rule.

For example, a fourth subset of a target rule set may include the pre-defined rule. A fifth subset of the target rule set may include the pre-scanning rule. Step 410 may be understood as determining the fourth subset and/or the fifth subset of the target rule set. For specific descriptions of the pre-defined rule and the pre-scanning rule, refer to the foregoing descriptions. Details are not described herein again.

A set including the pre-defined rule and/or a set including the pre-scanning rule may be considered as a first-level rule set.

420: Determine a check rule based on a feature of a target project.

Each project has its own feature, for example, a coding style of the project, a third-party library used in the project, a deployment form of the project, or a service scope of resolution in the project. In step 420, check rules may be determined as required for different projects, and rules of different types are recommended, thereby implementing more refined recommendations.

For example, as shown in FIG. 4, the check rule determined in step 420 may include at least one of the following types: a coding-style rule, a security rule of a third-party library, or a rule for similar projects.

As described above, a first subset of the target rule set may include a rule for similar projects corresponding to the target project. A second subset of the target rule set may include a security rule of a third-party library used for the target project (a security rule of a third-party library used in to-be-checked code). A third subset of the target rule set may include a coding-style rule of the target project (that is, a coding-style rule of the to-be-checked code). Step 420 may also be understood as determining at least one of the following subsets in the target rule set: the first subset, the second subset, or the third subset.

For specific descriptions of the coding-style rule, the security rule of the third-party library, or the rule for similar projects, refer to the foregoing descriptions. Details are not described herein again. A set including the coding-style rule and/or a set including the security rule of the third-party library may be considered as a second-level rule set.

A set including the rule for similar projects may be considered as a third-level rule set.

A set obtained by performing deduplication and filtering on check rules in the rule sets of the foregoing three levels may be used as the target rule set. Alternatively, it may be understood that a union set of the rule sets of the foregoing three levels is used as the target rule set.

The target rule set may be recommended to a user for performing selection by the user.

An execution sequence of processes of determining the check rules of types is not limited in this embodiment of this application, that is, an execution sequence of processes of determining the foregoing subsets is not limited. For example, step 410 and step 420 may be performed simultaneously. Alternatively, step 410 and step 420 may be performed sequentially. For another example, processes of determining the first subset and the third subset may be performed simultaneously, or may be performed sequentially.

Further, optionally, the method 400 may further include step 430.

430: Generate a rule configuration.

For example, as shown in FIG. 4, the rule configuration may include a basic configuration and/or a taint label. For specific descriptions of the rule configuration, refer to the foregoing descriptions. Details are not described herein again.

For example, step 430 may be performed before the target rule set is provided for the user.

For example, step 430 may be performed after the target rule set is provided for the user.

Further, optionally, the method 400 may further include step 440.

440: Obtain feedback information for the target rule set.

For example, the feedback information may be used to optimize a pre-order recommendation policy and/or a machine learning model.

FIG. 5 is an example of a processing procedure of a check rule according to an embodiment of this application. The following provides example descriptions for the method 400 shown in FIG. 4 with reference to FIG. 5.

As described above, in the solutions in embodiments of this application, a service may be provided in a form of a cloud service, for example, provided for a user for use. For ease of description, FIG. 5 mainly uses this as an example for description, and does not constitute any limitation on the solutions in embodiments of this application.

The solution in this embodiment of this application may be applied to a scenario in which an SAST service can be provided. For example, the SAST service can be provided in a scenario like an SAST cloud service platform, an IDE, or a local CLI. In the foregoing scenario, the solution in this embodiment of this application is used, so that a check rule can be recommended.

As described above, after the user creates a check task, the method 400 may be triggered to be performed.

For example, the user may create the check task from a remote code repository. For example, the user may provide a git link, and create a check task in the SAST cloud service platform.

For example, the user may create the check task locally. For example, the user may create the check task through a local IDE or the local CLI.

As shown in FIG. 5, check rules recommended for the user may be classified into three levels, that is, a first-level rule set, a second-level rule set, and a third-level rule set.

The following separately provides example descriptions for manners of determining the rule sets of the three levels.

After the check task is created, an interaction interface is provided for the user to input related information about a current project (that is, a target project).

For example, a plurality of candidate labels are provided for the user for performing selection by the user. For example, a label of a project may indicate an ecosystem or a programming language of the project. As shown in FIG. 5, the candidate label may include Security, Spring, Java, or the like. The label of the project may also be referred to as an attribute label of a repository.

The user may select the label of the project from the plurality of candidate labels. A pre-defined rule may be determined based on the label provided by the user and/or the programming language of the project.

Code of the project is scanned, to determine a pre-scanning rule.

A set including the pre-defined rule and the pre-scanning rule may be referred to as the first-level rule set.

Further, as shown in FIG. 5, source code (that is, to-be-checked code), a comment, a readme file, and a package management file of the project are obtained.

A feature of the project may be identified based on the source code, the comment, the readme file, and the package management file, and the second-level rule set and the third-level rule set are provided for the project.

In an example, a coding style of the source code is identified, to determine a check rule corresponding to the coding style.

For example, traversal check is performed on an AST of the source code based on static check, to identify the coding style of the source code. For example, if most content in the source code conforms to a coding style, the coding style may be used as the coding style of the source code. Then, a rule for checking the coding style, that is, the check rule corresponding to the coding style, is provided. For example, the check rule corresponding to the coding style may be used to check whether a name, a comment, code indentation, and the like of the source code conform to a specification of the coding style.

In an example, third-party software used in the project is matched, to determine a check rule corresponding to the third-party software.

For example, the package management file is reviewed based on static check, to match the third-party software used by the user. Then, a check rule for checking the third-party software, that is, the check rule corresponding to the third-party software, is provided for the user. For example, the check rule corresponding to the third-party software may include a check rule for an API that has a vulnerability, a check rule for API misuse, and the like.

A set including the check rule corresponding to the coding style and the check rule corresponding to the third-party software may be referred to as the second-level rule set.

In an example, embedding representation is performed on the source code and the readme file, to obtain embedding of the source code and the readme file. Similarity calculation is performed between the embedding of the source code and the readme file and embedding of a candidate project in a vector database, and a similar project of the target project is identified, to determine a check rule selected for the similar project. For example, the similar project of the target project may include N candidate projects that have a highest similarity to the target project.

Embedding representation may be implemented by using a code LLM. For specific descriptions, refer to the foregoing descriptions.

Embedding of a mature project is store in the vector database. To be specific, embedding representation on source code and a readme file of the mature project is performed, and embedding of the source code and the readme file of the mature project is pre-stored in the vector database.

A set including the check rule of the similar project may be referred to as the third-level rule set.

Deduplication and filtering are performed on the rule sets of the foregoing three levels, and a related configuration is generated for a rule that is in the rule sets and that needs to be configured. For example, as shown in FIG. 5, the related configuration may include a basic configuration and a taint label. After the configuration is generated, a target rule set is generated for performing selection by the user.

As shown in FIG. 5, in the solution in this embodiment of this application, the feature of the project may be determined by using the static check and machine learning, and different rules are recommended for different projects based on features of the project.

Further, feedback information for the target rule set is obtained, and a recommendation policy, the machine learning model, or the like is optimized by using the feedback information.

FIG. 6 and FIG. 7 respectively show examples of two application scenarios of solutions according to embodiments of this application.

FIG. 6 is an example of performing the solution in an SAST cloud service platform.

FIG. 7 is an example of performing the solution in an IDE.

The following provides example descriptions for the solutions in embodiments of this application with reference to FIG. 6 and FIG. 7.

As shown in FIG. 6, when a user creates a check task, or when a user configures a task for the first time, the user may be prompted to input a git link and select an attribute label on a task configuration interface.

The background may run a recommendation algorithm, that is, perform the method (for example, the method 300 or the method 400) in embodiments of this application, to obtain a target rule set. For example, the target rule set may include a first subset, a second subset, a third subset, a fourth subset, and a fifth subset.

For example, prompt information is displayed on an interaction interface, to determine whether the user needs a recommended rule to be displayed. For example, whether the recommended rule is to be displayed is inquired in a form of a pop-up window. If the user confirms that the recommended rule is to be displayed, a rule recommendation result, that is, a check rule in the target rule set, is displayed.

Further, whether a configuration file is generated for each check rule may also be displayed in the SAST cloud service platform. The user may preview a check rule for which a configuration file is generated, and view the configuration file.

Further, a modification function may also be provided in the SAST cloud service platform. The user may modify the configuration file or the check rule.

Further, related information about each check rule may also be marked in the SAST cloud service platform. For example, related information about a check rule may include a specification document to which the check rule belongs, a common weakness enumeration (common weakness enumeration, CWE) type to which the check rule belongs, or the like.

The user may select a needed check rule.

If the user does not configure a code repository for the first time, after a code change is committed (committed), a supplementary rule may be recommended.

For example, a type of the supplementary rule may include a coding-style rule, a security rule of a third-party library, a rule for similar projects, or the like. To be specific, when introduction of new third-party software into committed code is detected, a coding style is changed, or a similar project is changed, a corresponding supplementary rule may be recommended.

For example, after code is changed, if it is detected that the new third-party software is introduced, a check rule corresponding to the new third-party software may be provided for the user. For another example, after code is changed, if a change of a coding style of the code is identified, a check rule corresponding to a coding style of the changed code may be provided for the user. For another example, after code is changed, if a change of a similar project of a project to another project is identified, that is, a new similar code repository is matched, a check rule selected for the new similar project may be provided for the user.

In the solution shown in FIG. 7, when an SAST service is used in an IDE, if a user configures a task for the first time, the user may be prompted to select an attribute label on a task configuration interface.

The background may run a recommendation algorithm, that is, perform the method (for example, the method 300 or the method 400) in embodiments of this application, to obtain a target rule set. For example, the target rule set may include a first subset, a second subset, a third subset, a fourth subset, and a fifth subset.

A main difference between the solution shown in FIG. 6 and the solution shown in FIG. 7 lies in that, in the solution shown in FIG. 7, in the IDE, the code change may be monitored in real time, and the check rule corresponding to the changed code may be recommended to the user in real time.

For other descriptions, refer to the related descriptions in FIG. 6. Details are not described herein again.

It should be understood that the solutions shown in FIG. 4 to FIG. 7 are merely examples, and do not constitute any limitation on the solutions in embodiments of this application. For other possible implementations, refer to the method 300.

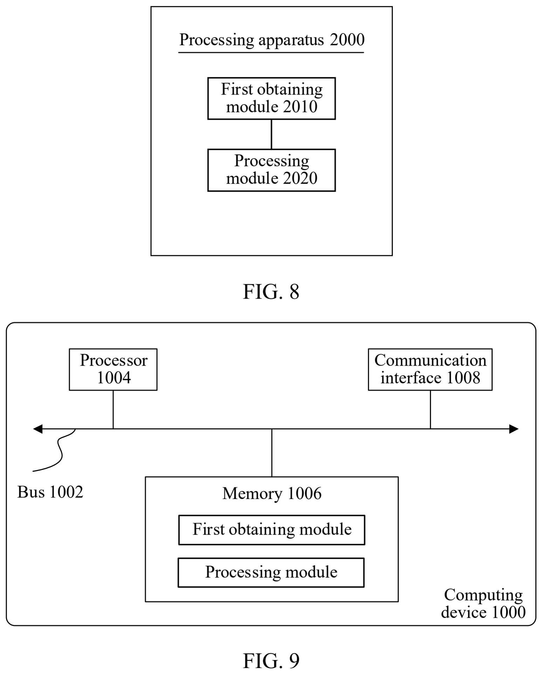

The following describes apparatuses in embodiments of this application with reference to FIG. 8 to FIG. 11. It should be understood that the apparatuses described below can perform the methods in the foregoing embodiments of this application. To avoid unnecessary repetition, repeated descriptions are properly omitted in the following descriptions of the apparatuses in embodiments of this application.

FIG. 8 is a block diagram of a check rule processing apparatus according to an embodiment of this application. The processing apparatus 2000 shown in FIG. 8 may be configured to perform the method shown in FIG. 3. The processing apparatus 2000 includes a first obtaining module 2010 and a processing module 2020.

In a possible implementation, the processing apparatus 2000 may be configured to perform the method shown in FIG. 3.

The first obtaining module 2010 is configured to obtain to-be-checked code and/or related information about the to-be-checked code, where the related information about the to-be-checked code includes at least one of the following: a programming language of the to-be-checked code, a development framework of the to-be-checked code, a deployment form of the to-be-checked code, a service scope of the to-be-checked code, a third-party library used in the to-be-checked code, a coding style of the to-be-checked code, a comment of the to-be-checked code, or description information of a target project to which the to-be-checked code belongs.

The processing module 2020 is configured to: determine a target rule set from a static analysis rule library based on the to-be-checked code and/or the related information about the to-be-checked code, where the target rule set includes one or more candidate check rules, and the one or more candidate check rules are used to perform static analysis on the to-be-checked code; and perform control to display the target rule set.

Optionally, the processing module 2020 is specifically configured to: determine a first subset of the target rule set from the static analysis rule library based on similarities between the target project and a plurality of candidate projects, where the similarities between the target project and the plurality of candidate projects are determined based on a similarity between the to-be-checked code and code of at least one first candidate project and/or a similarity between the related information about the to-be-checked code and related information about code of at least one second candidate project, and the plurality of candidate projects include the at least one first candidate project or the plurality of candidate projects include the at least one second candidate project.

Optionally, the processing module 2020 is specifically configured to: determine the first subset according to a check rule selected for N candidate projects that are in the plurality of candidate projects and that have a highest similarity to the target project, where the check rule selected for the N candidate projects is from the static analysis rule library, and N is a positive integer.

Optionally, the processing module 2020 is specifically configured to: perform an embedding representation on the to-be-checked code to obtain a representation vector of the to-be-checked code; and determine similarities between the to-be-checked code and code of a plurality of first candidate projects based on similarities between the representation vector of the to-be-checked code and representation vectors of the code of the plurality of first candidate projects; or the description information of the target project is indicated by a readme file of the target project. The processing module 2020 is specifically configured to: perform an embedding representation on the readme file of the target project, to obtain a representation vector of the readme file of the target project; and determine similarities between the related information about the to-be-checked code and related information about code of a plurality of second candidate projects based on similarities between the representation vector of the readme file of the target project and representation vectors of readme files of the plurality of second candidate projects.

Optionally, the processing module 2020 is specifically configured for at least one of the following: obtaining, from the static analysis rule library, a check rule corresponding to the third-party library used in the to-be-checked code, and determining a second subset of the target rule set according to the check rule corresponding to the third-party library used in the to-be-checked code; obtaining, from the static analysis rule library, a check rule corresponding to the coding style of the to-be-checked code, and determining a third subset of the target rule set according to the check rule corresponding to the coding style of the to-be-checked code; or obtaining, from the static analysis rule library, a check rule corresponding to the programming language of the to-be-checked code, and determining a fourth subset of the target rule set according to the check rule corresponding to the programming language of the to-be-checked code.

Optionally, the processing apparatus 2000 further includes: a second obtaining module (not shown in the figure), configured to: obtain a package management file of the to-be-checked code; and analyze the package management file, to determine the third-party library used in the to-be-checked code.

The second obtaining module and the first obtaining module may be a same module, or may be different modules.

Optionally, the processing module 2020 is specifically configured to: scan the to-be-checked code according to a preset rule set, to determine a candidate problem in the to-be-checked code; and determine a fifth subset of the target rule set according to a check rule, in the preset rule set, according to which the candidate problem is exposed.

Optionally, the processing module 2020 is specifically configured to: perform control to display the candidate problem; obtain feedback information of the candidate problem, where the feedback information of the candidate problem indicates a real problem in the candidate problem; and determine the fifth subset according to a check rule, in the preset rule set, according to which the real problem is exposed.

Optionally, the processing apparatus 2000 further includes: a configuration module (not shown in the figure), configured to generate a configuration for a to-be-configured target check rule in the target rule set based on the to-be-checked code.

Optionally, the processing apparatus 2000 further includes: a third obtaining module (not shown in the figure), configured to obtain feedback information for the target rule set. The feedback information for the target rule set indicates a selected target check rule.

The third obtaining module, the second obtaining module, and the first obtaining module may be a same module, or may be different modules.

For specific descriptions, refer to the foregoing method 300. Details are not described herein again.

Each module in the processing apparatus 2000 may be implemented by software or hardware. For example, the following uses the processing module 2020 as an example to describe an implementation of the processing module 2020. Similarly, for implementations of other modules, refer to the implementation of the processing module 2020.

The module is used as an example of a software functional unit, and the processing module 2020 may include code run on a computing instance. The computing instance may include at least one of a physical host (a computing device), a virtual machine, and a container. Further, there may be one or more computing instances. For example, the processing module 2020 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the processing module 2020 may include at least one computing device like a server. Alternatively, the processing module 2020 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

A plurality of computing devices included in the processing module 2020 may be distributed in a same region, or may be distributed in different regions. The plurality of computing devices included in the processing module 2020 may be distributed in a same AZ, or may be distributed in different AZs. Similarly, the plurality of computing devices included in the processing module 2020 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in other embodiments, the processing module 2020 may be configured to perform any step in the check rule processing method, and the first obtaining module 2010 may be configured to perform any step in the check rule processing method. Steps that modules are responsible for implementing may be specified as required, and all functions of the processing apparatus 2000 are implemented by respectively implementing different steps in the check rule processing method by the modules.

This application further provides a computing device 1000. As shown in FIG. 9, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that a quantity of processors and a quantity of memories in the computing device 1000 are not limited in this application.

The bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 9, but it does not indicate that there is only one bus or only one type of bus. The bus 1002 may include a path for information transfer between various components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1006 stores executable program code, and the processor 1004 executes the executable program code to separately implement functions of the first obtaining module 2010 and the processing module 2020, to implement the check rule processing method. That is, the memory 1006 stores instructions used to perform the check rule processing method.

The communication interface 1008 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

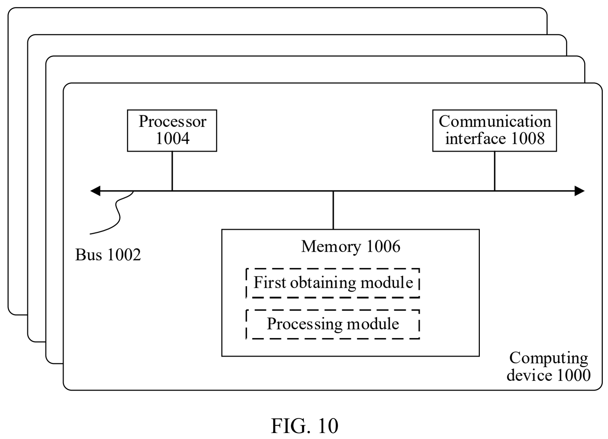

As shown in FIG. 10, the computing device cluster includes at least one computing device 1000. A memory 1006 in one or more computing devices 1000 in the computing device cluster may store same instructions used to perform the check rule processing method.

In some possible implementations, a memory 1006 in one or more computing devices 1000 in the computing device cluster may alternatively store a part of instructions used to perform the check rule processing method. In other words, a combination of the one or more computing devices 1000 may jointly execute the instructions used to perform the check rule processing method.

It should be noted that memories 1006 in different computing devices 1000 in the computing device cluster may store different instructions, respectively used to perform a part of functions of the check rule processing apparatus. In other words, the instructions stored in the memories 1006 in the different computing devices 1000 may implement a function of one or more modules in the first obtaining module 2010 and the processing module 2020.

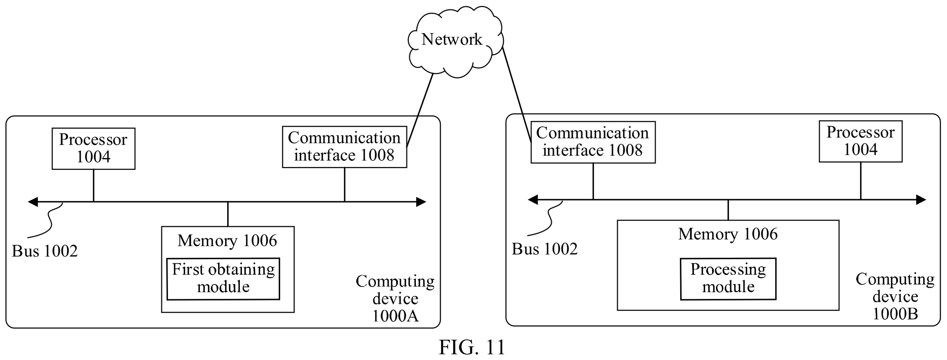

In some possible implementations, the one or more computing devices in the computing device cluster may be connected through a network. The network may be a wide area network, a local area network, or the like. FIG. 11 shows a possible implementation. As shown in FIG. 11, two computing devices 1000A and 1000B are connected through a network. Specifically, the computing device is connected to the network through a communication interface in each computing device. In this type of possible implementation, a memory 1006 in the computing device 1000A stores instructions for performing a function of the first obtaining module 2010. In addition, a memory 1006 in the computing device 1000B stores instructions for performing a function of the processing module 2020.

A connection manner of a computing device cluster shown in FIG. 11 may be that, considering that data may need to be stored for the check rule processing method provided in this application, it is considered that the function implemented by the processing module 2020 is performed by the computing device 1000B.

It should be understood that functions of the computing device 1000A shown in FIG. 11 may alternatively be completed by a plurality of computing devices 1000. Similarly, functions of the computing device 1000B may alternatively be completed by a plurality of computing devices 1000.

An embodiment of this application further provides a computer program product including instructions. The computer program product may be software or a program product that includes the instructions and that can run on a computing device or can be stored in any usable medium. When the computer program product runs on at least one computing device, the at least one computing device is caused to perform the check rule processing method.

An embodiment of this application further provides a computer-readable storage medium. The computer-readable storage medium may be any usable medium that can be stored by a computing device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform a check rule processing method.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one place, or may be distributed on a plurality of network units. A part or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such understanding, the technical solutions in this application essentially, or the part contributing to a conventional technology, or a part of the technical solutions may be implemented in a form of a software product. The computer software product is stored in a storage medium and includes several instructions for instructing a computer device (which may be a personal computer, a server, a network device, or the like) to perform all or a part of steps in the processing methods described in embodiments of this application. The storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A check rule processing method, comprising:
obtaining to-be-checked code and/or related information about the to-be-checked code, wherein the related information about the to-be-checked code comprises at least one of the following: a programming language of the to-be-checked code, a development framework of the to-be-checked code, a deployment form of the to-be-checked code, a service scope of the to-be-checked code, a third-party library used in the to-be-checked code, a coding style of the to-be-checked code, or description information of a target project to which the to-be-checked code belongs;
determining a target rule set from a static analysis rule library based on the to-be-checked code and/or the related information about the to-be-checked code, wherein the target rule set comprises one or more candidate check rules, and the one or more candidate check rules are used to perform static analysis on the to-be-checked code; and
performing control to display the target rule set.

2. The processing method according to claim 1, wherein determining the target rule set from the static analysis rule library based on the to-be-checked code and/or the related information about the to-be-checked code comprises:
determining a first subset of the target rule set from the static analysis rule library based on similarities between the target project and a plurality of candidate projects, wherein the similarities between the target project and the plurality of candidate projects are determined based on a similarity between the to-be-checked code and code of at least one first candidate project and/or a similarity between the related information about the to-be-checked code and related information about code of at least one second candidate project, and the plurality of candidate projects comprise the at least one first candidate project or the plurality of candidate projects comprise the at least one second candidate project.

3. The processing method according to claim 2, wherein determining the first subset of the target rule set from the static analysis rule library based on the similarities between the target project and the plurality of candidate projects comprises:
determining the first subset according to a check rule selected for N candidate projects that are in the plurality of candidate projects and that have a highest similarity to the target project, wherein the check rule selected for the N candidate projects is from the static analysis rule library, and N is a positive integer.

4. The processing method according to claim 2 or 3, wherein the processing method further comprises:
performing an embedding representation on the to-be-checked code to obtain a representation vector of the to-be-checked code; and
determining similarities between the to-be-checked code and code of a plurality of first candidate projects based on similarities between the representation vector of the to-be-checked code and representation vectors of the code of the plurality of first candidate projects; or the description information of the target project is indicated by a readme file of the target project, and the processing method further comprises:
performing an embedding representation on the readme file of the target project, to obtain a representation vector of the readme file of the target project; and
determining similarities between the related information about the to-be-checked code and related information about code of a plurality of second candidate projects based on similarities between the representation vector of the readme file of the target project and representation vectors of readme files of the plurality of second candidate projects.

5. The processing method according to any one of claims 1 to 4, wherein determining the target rule set from the static analysis rule library based on the to-be-checked code and/or the related information about the to-be-checked code comprises at least one of the following:
obtaining, from the static analysis rule library, a check rule corresponding to the third-party library used in the to-be-checked code, and
determining a second subset of the target rule set according to the check rule corresponding to the third-party library used in the to-be-checked code;
obtaining, from the static analysis rule library, a check rule corresponding to the coding style of the to-be-checked code, and
determining a third subset of the target rule set according to the check rule corresponding to the coding style of the to-be-checked code; or
obtaining, from the static analysis rule library, a check rule corresponding to the programming language of the to-be-checked code, and
determining a fourth subset of the target rule set according to the check rule corresponding to the programming language of the to-be-checked code.

6. The processing method according to any one of claims 1 to 5, wherein determining the target rule set from the static analysis rule library based on the to-be-checked code and/or the related information about the to-be-checked code comprises:
scanning the to-be-checked code according to a preset rule set, to determine a candidate problem in the to-be-checked code; and
determining a fifth subset of the target rule set according to a check rule, in the preset rule set, according to which the candidate problem is exposed.

7. The processing method according to claim 6, wherein determining the fifth subset of the target rule set according to the check rule, in the preset rule set, according to which the candidate problem is exposed comprises:
performing control to display the candidate problem;
obtaining feedback information of the candidate problem, wherein the feedback information of the candidate problem indicates a real problem in the candidate problem; and
determining the fifth subset according to a check rule, in the preset rule set, according to which the real problem is exposed.

8. The processing method according to any one of claims 1 to 7, wherein the processing method further comprises:
obtaining a package management file of the to-be-checked code; and
analyzing the package management file, to determine the third-party library used in the to-be-checked code.

9. The processing method according to any one of claims 1 to 8, wherein the processing method further comprises:
generating a configuration for a to-be-configured target check rule in the target rule set based on the to-be-checked code.

10. The processing method according to any one of claims 1 to 9, wherein the processing method further comprises:
obtaining feedback information for the target rule set, wherein the feedback information for the target rule set indicates a selected target check rule.

11. A check rule processing apparatus, comprising:
a first obtaining module, configured to obtain to-be-checked code and/or related information about the to-be-checked code, wherein the related information about the to-be-checked code comprises at least one of the following: a programming language of the to-be-checked code, a development framework of the to-be-checked code, a deployment form of the to-be-checked code, a service scope of the to-be-checked code, a third-party library used in the to-be-checked code, a coding style of the to-be-checked code, a comment of the to-be-checked code, or description information of a target project to which the to-be-checked code belongs; and
a processing module, configured to:
determine a target rule set from a static analysis rule library based on the to-be-checked code and/or the related information about the to-be-checked code, wherein the target rule set comprises one or more candidate check rules, and the one or more candidate check rules are used to perform static analysis on the to-be-checked code; and
perform control to display the target rule set.

12. The processing apparatus according to claim 11, wherein the processing module is specifically configured to:
determine a first subset of the target rule set from the static analysis rule library based on similarities between the target project and a plurality of candidate projects, wherein the similarities between the target project and the plurality of candidate projects are determined based on a similarity between the to-be-checked code and code of at least one first candidate project and/or a similarity between the related information about the to-be-checked code and related information about code of at least one second candidate project, and the plurality of candidate projects comprise the at least one first candidate project or the plurality of candidate projects comprise the at least one second candidate project.

13. The processing apparatus according to claim 12, wherein the processing module is specifically configured to:
determine the first subset according to a check rule selected for N candidate projects that are in the plurality of candidate projects and that have a highest similarity to the target project, wherein the check rule selected for the N candidate projects is from the static analysis rule library, and N is a positive integer.

14. The processing apparatus according to claim 12 or 13, wherein the processing module is specifically configured to:
perform an embedding representation on the to-be-checked code to obtain a representation vector of the to-be-checked code; and
determine similarities between the to-be-checked code and code of a plurality of first candidate projects based on similarities between the representation vector of the to-be-checked code and representation vectors of the code of the plurality of first candidate projects; or the description information of the target project is indicated by a readme file of the target project, and the processing module is specifically configured to:
perform an embedding representation on the readme file of the target project, to obtain a representation vector of the readme file of the target project; and
determine similarities between the related information about the to-be-checked code and related information about code of a plurality of second candidate projects based on similarities between the representation vector of the readme file of the target project and representation vectors of readme files of the plurality of second candidate projects.

15. The processing apparatus according to any one of claims 11 to 14, wherein the processing module is specifically configured for at least one of the following:
obtaining, from the static analysis rule library, a check rule corresponding to the third-party library used in the to-be-checked code, and
determining a second subset of the target rule set according to the check rule corresponding to the third-party library used in the to-be-checked code;
obtaining, from the static analysis rule library, a check rule corresponding to the coding style of the to-be-checked code, and
determining a third subset of the target rule set according to the check rule corresponding to the coding style of the to-be-checked code; or
obtaining, from the static analysis rule library, a check rule corresponding to the programming language of the to-be-checked code, and
determining a fourth subset of the target rule set according to the check rule corresponding to the programming language of the to-be-checked code.

16. The processing apparatus according to any one of claims 11 to 15, wherein the processing module is specifically configured to:
scan the to-be-checked code according to a preset rule set, to determine a candidate problem in the to-be-checked code; and
determine a fifth subset of the target rule set according to a check rule, in the preset rule set, according to which the candidate problem is exposed.

17. The processing apparatus according to claim 16, the processing module is specifically configured to:
perform control to display the candidate problem;
obtain feedback information of the candidate problem, wherein the feedback information of the candidate problem indicates a real problem in the candidate problem; and
determine the fifth subset according to a check rule, in the preset rule set, according to which the real problem is exposed.

18. The processing apparatus according to any one of claims 11 to 17, wherein the processing apparatus further comprises:
a second obtaining module, configured to:
obtain a package management file of the to-be-checked code; and
analyze the package management file, to determine the third-party library used in the to-be-checked code.

19. The processing apparatus according to any one of claims 11 to 18, wherein the processing apparatus further comprises:
a configuration module, configured to generate a configuration for a to-be-configured target check rule in the target rule set based on the to-be-checked code.

20. The processing apparatus according to any one of claims 11 to 19, wherein the processing apparatus further comprises:
a third obtaining module, configured to obtain feedback information for the target rule set, wherein the feedback information for the target rule set indicates a selected target check rule.

21. A computing device cluster, comprising at least one computing device, wherein each computing device comprises a processor and a memory; and
a processor of the at least one computing device is configured to execute instructions stored in a memory of the at least one computing device, to cause the computing device cluster to perform the method according to any one of claims 1 to 10.

22. A computer-readable storage medium, comprising computer program instructions, wherein when the computer program instructions are executed by a computing device cluster, the computing device cluster performs the method according to any one of claims 1 to 10.

23. A computer program product comprising instructions, wherein when the instructions are run by a computing device cluster, the computing device cluster is caused to perform the method according to any one of claims 1 to 10.
